(19) Europäisches Patentamt
European Patent Office
Office européen des brevets

(11) **EP 4 451 667 A1**

(12) **EUROPEAN PATENT APPLICATION**

(43) Date of publication:
**23.10.2024 Bulletin 2024/43**

(21) Application number: **24165085.2**

(22) Date of filing: **21.03.2024**

(51) International Patent Classification (IPC):
***H04N 13/117*** (2018.01)

(52) Cooperative Patent Classification (CPC):
**H04N 13/117; H04N 23/90**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023056851**

(71) Applicant: **CANON KABUSHIKI KAISHA**
**Tokyo 146-8501 (JP)**

(72) Inventors:
• **MURAKAMI, Yo**
  **Tokyo, 146-8501 (JP)**
• **IWAMOTO, Shohei**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **INFORMATION PROCESSING APPARATUS FOR VIRTUAL VIEWPOINT IMAGES, CONTROL METHOD, AND PROGRAM FOR THE SAME**

(57) An information processing apparatus (203) includes one or more memories storing instructions and one or more processors executing the instructions to: obtain a user operation; set, based on the obtained user operation, positions and orientations of a plurality of virtual cameras in a virtual viewpoint image generated from a plurality of images captured by a plurality of image capturing apparatuses; generate a camera path from the positions and the orientations of the plurality of virtual cameras; and select a procedure for generating the camera path between generating the camera path using the set positions and orientations of the plurality of virtual cameras and generating the camera path using the set positions and orientations of the virtual cameras and a preset position and orientation of a virtual camera.

FIG. 8

## Description

BACKGROUND OF THE INVENTION

Field of the Invention

The present invention relates to an information processing apparatus for generating a camera path in a virtual viewpoint image.

Description of the Related Art

Recent known image processing systems can generate an image viewed from a virtual viewpoint that is specified by a user from multiple images obtained by capturing a subject with a plurality of cameras. The image viewed from the virtual viewpoint specified by the user is hereinafter referred to as a virtual viewpoint image. These image processing systems create a subject model by presuming the shape of an image acquisition target, such as a person, and generates a virtual viewpoint image viewed from freely changeable viewpoint. The virtual viewpoint image can be continuously generated while the positions and orientations of the virtual camera are being changed.

Such virtual viewpoint images are used for achieving more realistic visual representation specifically in competitive sports broadcasting, such as live coverage of sports events. In sports broadcasting, clip video using virtual viewpoint images is sometimes generated for replays of impactful moments during the match. One of a method for generating a camera path for generating clip video using virtual viewpoint images is a key frame method. This is a method of generating a camera path by the user registering multiple virtual camera parameters of any time, position, and orientation for key frames and interpolating the key frames using a predetermined method.

Japanese Patent Laid-Open No. 2007-25979 discloses a method for generating a camera path by interpolating between specified key frames using spline interpolation.

However, the method disclosed in Japanese Patent Laid-Open No. 2007-25979 may generate a redundant camera path in moving to a preset position.

SUMMARY OF THE INVENTION

The present invention in its first aspect provides an information processing apparatus as specified in claims 1 to 10.

The present invention in its second aspect provides a method for controlling an information processing apparatus as specified in claim 11.

The present invention in its third aspect provides a non-transitory recording medium as specified in claim 12.

Further features of the present invention will become apparent from the following description of example embodiments with reference to the attached drawings.

BRIEF DESCRIPTION OF THE DRAWINGS

Fig. 1 is a diagram illustrating an example of interpolation of virtual cameras at two points.
Fig. 2 is a diagram illustrating the overall configuration of an image processing system.
Figs. 3A and 3B are diagrams illustrating an information processing apparatus shown in Fig. 2 according to a first embodiment of the present invention.
Fig. 4 is a diagram illustrating the hardware configuration of the information processing apparatus.
Fig. 5 is a block diagram illustrating an example of the functional configuration of the information processing apparatus according to the first embodiment of the present invention.
Fig. 6 is a diagram illustrating the control modes of the information processing apparatus and its state transition.
Fig. 7A is a diagram illustrating the key frames of a virtual camera.
Fig. 7B is a diagram illustrating interpolation between the key frames.
Fig. 8 is a diagram illustrating paths of a virtual camera moving to a preset position.
Fig. 9 is a flowchart illustrating a processing procedure for generating a camera path for clip video in the first embodiment.
Fig. 10 is a flowchart illustrating a processing procedure for playing back a clip video in the first embodiment.
Fig. 11 is a flowchart illustrating a processing procedure when a preset moving button is pressed in the first embodiment.
Fig. 12 is a flowchart illustrating a processing procedure for moving to a preset position in the first embodiment.
Fig. 13 is a diagram illustrating a GUI of the information processing apparatus shown in Fig. 2 according to a second embodiment.
Fig. 14 is a diagram illustrating an example of the functional configuration of the information processing apparatus in the second embodiment.
Fig. 15 is a flowchart illustrating a processing procedure for generating a camera path for clip video in the second embodiment.
Fig. 16 is a flowchart illustrating a processing procedure when a preset moving button is pressed in the second embodiment.

DESCRIPTION OF THE EMBODIMENTS

First Embodiment

A first embodiment will be described in detail. In this embodiment, the image processing system has predetermined interpolation procedures for key frames in virtual viewpoint images and for interpolating from the current position of the virtual viewpoint to the preset position of the virtual camera. The image processing system generates a camera path following the predetermined interpolation procedures.

Here, the virtual viewpoint is a viewpoint specified by the user in the three-dimensional space of the virtual environment. The following description is made using a camera (virtual camera) that is virtually placed at a virtual viewpoint position for the convenience of description. In other words, the position of the virtual viewpoint and the eye gaze direction from the virtual viewpoint correspond to the position and orientation of the virtual camera. The field of view from the virtual viewpoint corresponds to the angle of view of the virtual camera. This virtual viewpoint can freely be specified by the user.

The virtual viewpoint images of this embodiment are not limited to the image corresponding to the viewpoint that is freely specified by the user and include an image corresponding to a viewpoint that is selected from a plurality of candidates by the user. In this embodiment, the specification of the virtual viewpoint is primarily described with respect to user operations; however, the specification of the virtual viewpoint may be automatically performed based on the result of image analysis or similar methods. In this embodiment, the description focuses on the case where the virtual viewpoint image is a moving image. In other words, the virtual viewpoint image is a video captured by a virtual camera.

The image processing system in this embodiment has the function of switching between a video captured by an actual image capturing apparatus, for example, a broadcasting camera, and a virtual viewpoint image corresponding to a virtual viewpoint.

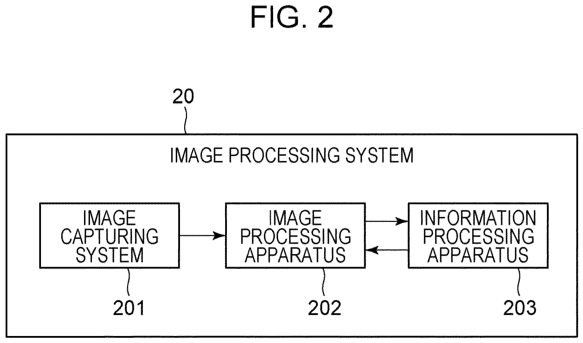

Fig. 2 is a diagram illustrating the overall configuration of an image processing system 20 for generating a virtual viewpoint image. The image processing system 20 includes an image capturing system 201, an image processing apparatus 202, an information processing apparatus 203.

The image capturing system 201 includes a plurality of digital cameras (image capturing apparatuses) at different positions so as to surround (around) the image-capturing region and captures images in time synchronization and transmits the multiple images captured from multiple viewpoints in synchronization to the image processing apparatus 202. The multiple images are transmitted via a communication medium such as a local area network (LAN) cable. Examples of the image-capturing region include a photo studio for creating a virtual viewpoint image, an athletic field for sporting events, and a stage for acting performance.

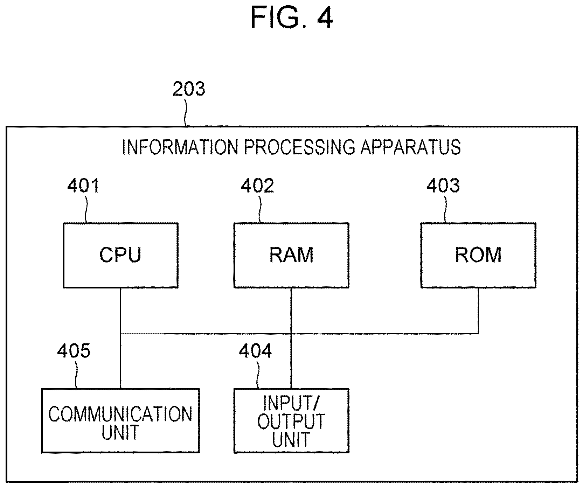

The image processing apparatus 202 generates three-dimensional shape data on the subject based on multiple images synchronously captured from multiple cameras. The three-dimensional shape data is generated using, for example, a visual hull method. As a result of this process, a three-dimensional (3D) point group (a set of points with three-dimensional coordinates) represents the three-dimensional shape of the subject. The method for deriving the three-dimensional shape of the subject from the captured image is illustrative only. A virtual viewpoint image corresponding to the virtual camera is generated from the three-dimensional shape data and a specified background model. The background model is a computer graphics (CG) model of, for example, an athletic field in which a physical camera group of the image capturing system 201 is placed. This background model is created in advance and stored in the image processing apparatus 202 (for example, in a read-only memory (ROM) 403 in Fig. 4, described later). An example of a method for generating the virtual viewpoint image uses model-based rendering (MBR). This processing allows generating a three-dimensional shape data image viewed from the positions and directions of the virtual cameras. The method for generating virtual viewpoint images is illustrative only. The position, the direction, and other information on the virtual camera are represented by camera parameters that the information processing apparatus 203 determines, described later. In this embodiment, both the three-dimensional shape data on the subject and the virtual viewpoint image are generated by the image processing apparatus 202; alternatively, the generation of the data may be shared by a plurality of image processing apparatuses.

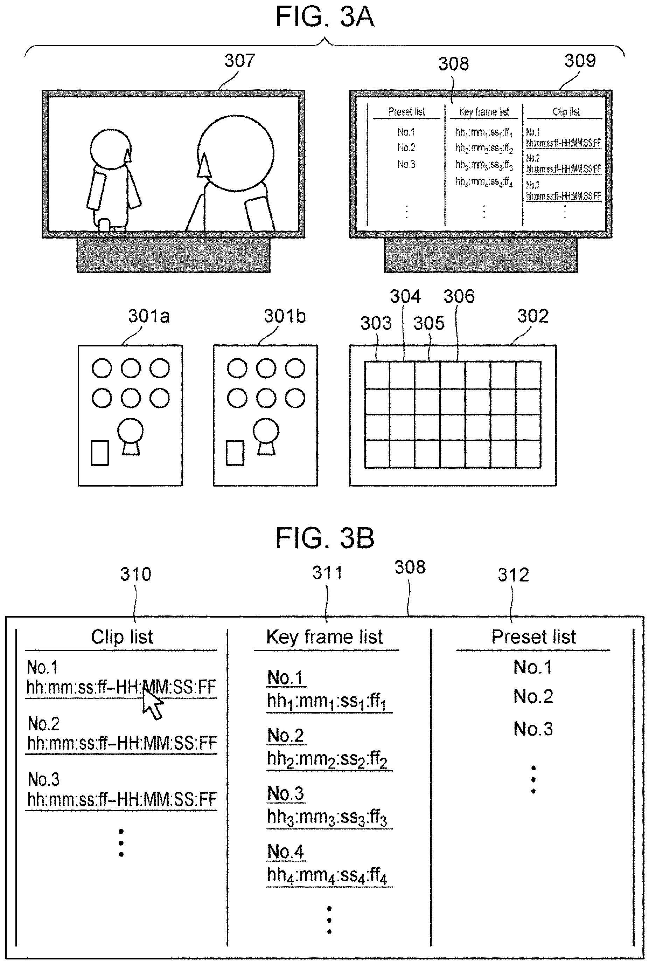

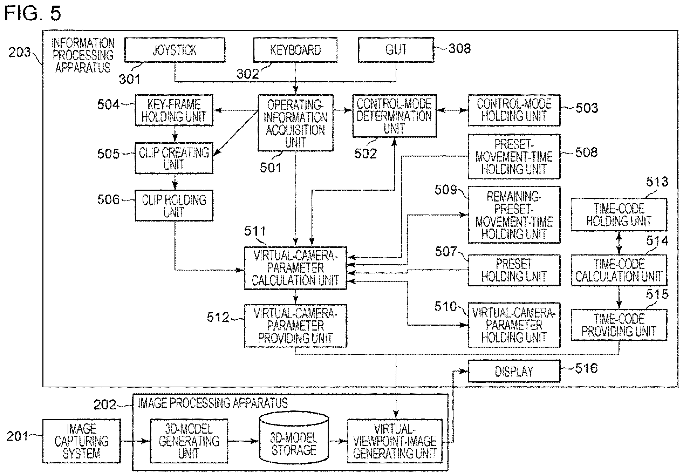

Figs. 3A and 3B are diagrams illustrating an example of the information processing apparatus 203. More details of the information processing apparatus 203 are described below with reference to the examples shown in Figs. 4 and 5. The information processing apparatus 203 connects to one or more input devices, such as joysticks 301a and 301b, for controlling the virtual camera. The user sets (determines) a camera path representing the viewpoint of the virtual camera by operating the joysticks 301a and 301b. In this embodiment, the multiple operating members of the joystick 301a are assigned commands to control parameters (x, y, and z) indicating the position of the virtual camera in the three-dimensional coordinates in the virtual space. The multiple operating members of the joystick 301b are assigned commands to control parameters (pan, tilt, and roll) for pan, tilt, and roll directions representing the orientation of the virtual camera in the virtual space.

The information processing apparatus 203 also connects to an input device, such as a keyboard 302. The individual keys of the keyboard 302 are assigned commands to generate a virtual viewpoint image. For example, a key 303 is assigned a command to register a key frame, and a key 304 is assigned a command to generate a camera path for a clip video from the registered key frame. A key 305 is assigned a command to register a preset position, and a key 306 is assigned a command to cancel the playback of the clip video.

An application for generating a virtual viewpoint image, stored in the information processing apparatus 203, has the function of assigning any command to any operating member among the joystick 301a, the joystick 301b, and the keyboard 302. The user can set any command to any operating member using the function.

In this embodiment, the information processing apparatus 203 further connects to two or more display units.

In this embodiment, the information processing apparatus 203 obtains a virtual viewpoint image generated by the image processing apparatus 202 from the image processing apparatus 202 and displays the virtual viewpoint image on a display unit 307. The information processing apparatus 203 displays a graphic user interface (GUI) 308 that displays a camera path for generating a clip video of the virtual viewpoint image, parameters (for example, present position) of the virtual camera, and other information on a display unit 309. The GUI 308 corresponds to the GUI of the application for generating a virtual viewpoint image.

Referring to Fig. 3B, the details of the GUI 308 displayed on the display unit 309 will be described. The GUI 308 contains a clip list 310, a key-frame list 311, and a preset list 312.

First, a method of operation on the GUI 308 in registering key frames and generating/playing back a clip video will be described. The user sets the position and orientation of the virtual camera at any time (time code) in the virtual viewpoint image and presses the key 303. In response to the user operation, the information processing apparatus 203 adds a key frame having a key frame ID and camera parameters and time code of the virtual camera to the key-frame list 311. The key frame IDs are assigned sequentially in the order added by the user. However, the user can freely change the order of key frame IDs. When the user performs a user operation, such as when the user presses the key 304, with one or more key frames set on the key-frame list 311, the information processing apparatus 203 generates a camera path from the key frames contained in the key-frame list 311. In this embodiment, the information processing apparatus 203 generates a camera path by interpolating the position and orientation of the virtual camera using the camera parameters of the virtual camera in the order of key frame IDs. The generated camera path is added to the clip list 310 every time the camera path is generated. For example, when the user clicks (selects) any camera path in the clip list 310, a virtual viewpoint image (clip video) to which the clicked camera path is applied is displayed on the display unit 307.

Next, a method for registering a preset position and a method for applying the preset position using the GUI 308 will be described. First, the method for registering a preset position will be described. When the user sets a virtual camera at any position and orientation and performs a user operation (e.g. presses the key 305), a preset position with a preset ID and information on the camera parameters of the virtual camera is added to the preset list 312. This allows the user to record the location of the virtual camera at a predetermined position and orientation on the information processing apparatus 203. Next, the method for applying the preset position will be described. When the user clicks (selects) any preset position in the preset list 312, the virtual camera shifts from the current state (position and orientation) to the preset state. In this embodiment, the information processing apparatus 203 generates a camera path for shifting the virtual camera from the current state (position and orientation) to a preset state and updates the position and orientation of the virtual camera (moves the virtual camera) following the camera path.

The information processing apparatus 203 can assign a preset position to any key on the keyboard 302. In this case, for example, when the user presses a key to which the preset position of the virtual camera is assigned, the information processing apparatus 203 moves the virtual camera to a preset position corresponding to the pressed key.

The information processing apparatus 203 transmits the camera path for the virtual camera selected based on the user operation to the image processing apparatus 202. The image processing apparatus 202 generates a virtual viewpoint image based on the camera path received from the information processing apparatus 203.

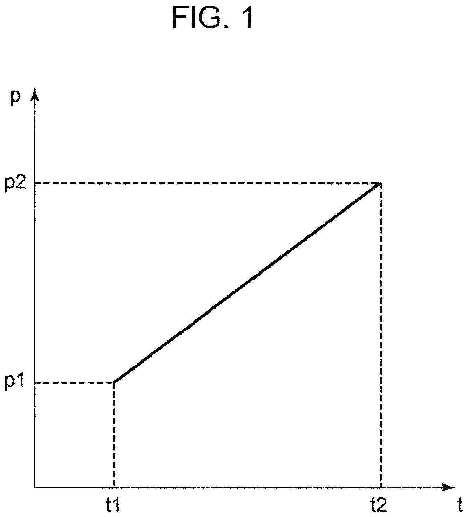

An example of interpolation between two key frames in camera path generation is illustrated in Fig. 1. Fig. 1 illustrates a method for interpolating one value p of the camera parameters at a start point and an end point. When the user sets the time and the parameter at the start point to t1 and p1 and the time and the parameter at the end point to t2 and p2, respectively, the value p is interpolated between t1 and t2 as in the graph of Fig. 1. The parameters of the virtual camera interpolated in this way include position coordinates (x, y, and z), orientations (pan, tilt, and roll), and a magnification ratio (Zoom).

The number of key frames registered in generating a desired camera path can be decreased by unlimiting the upper limit and the lower limit of the parameters representing the orientations, pan, tilt, and roll. For example, consider the case where the gazing point is set at any position, and a camera path with two rotations while facing in the direction of the gazing point is to be generated. Unlimiting the upper limit and the lower limit of the rotation angle allows generation of the camera path only by setting the parameter at two points, the start point and the end point, to 0° and 720°, respectively. In contrast, if the minimum limit 0° and the maximum limit 359° are set, rotation angles of 360° or more cannot be set, which requires three or more key frames. In this embodiment, the camera path is generated using key frames with unlimited upper limit and lower limit. The method for generating a camera path using key frames is hereinafter also referred to as a key frame method.

In generating a camera path for another application, using the same interpolation procedure as in generating a camera path for clip video using the key frame method may generate a camera path that is not desired by the user. One example is moving the virtual camera from a current position to a registered position and orientation (preset position). One example is a use case in a real-time live broadcast of a baseball game. In a live broadcast, it is easy to obtain a realistic video from a viewpoint from the mound on the field or from the catcher's position. Real-time live broadcasting requires frequent switching between the viewpoints, which requires the function of registering multiple preset positions and switching the position of the virtual camera to a desired preset position. Instant switching of the virtual camera from the current position to the preset position may take much time for the user who is operating the virtual camera to determine whether the switched position is the desired preset position. This needs to devise methods such as generating a camera path for moving the virtual camera from the current position to the preset position and displaying the process of the movement. However, generating the camera path by interpolating between the current position and the preset position using the same method as the key frame interpolation described above may generate a redundant camera path, such as unnecessary rotation. For this reason, the position relationship needs to be taken into account in generating a camera path from the current position to the preset position.

Fig. 4 is a diagram illustrating an example of the hardware configuration of the information processing apparatus 203 configured to generate and edit the camera path for a virtual viewpoint image according to this embodiment. The information processing apparatus 203 includes a central processing unit (CPU) 401, a random-access memory (RAM) 402, a read-only memory (ROM) 403, an input/output device 404, and a communication unit 405. For virtual viewpoint images, users, such as viewers or camera operators, can freely operate the position and orientation of the virtual camera. The virtual viewpoint image may be either moving images or still images.

The CPU 401 is a processor that executes programs stored in the ROM 403 using the RAM 402 as a work memory and controls the components of the information processing apparatus 203 as a whole.

Thus, the functions of the processing units (e.g. information processing apparatus 203) illustrated in Fig. 2 are performed by the CPU 401 executing the various programs.

The RAM 402 temporarily stores computer programs read from the ROM 403 and intermediate results of calculation.

The ROM 403 holds computer programs and data that require no change. The ROM 403 also stores data necessary for interpolating camera parameters and data necessary for determining an interpolation method, such as the key frame method described above.

The input/output device 404 includes one or a plurality of controllers for controlling the virtual camera and one or a plurality of display units that displays, for example, the state of the virtual camera. The one or a plurality of controllers includes general devices for the user to perform an input operation, such as a keyboard and a mouse, a joystick, a tab, and a jog dial for controlling the virtual camera. The display units include one or a plurality of display devices (hereinafter referred to as "monitor") for displaying information necessary for the user.

Fig. 5 is a block diagram illustrating an example of the functional configuration of the information processing apparatus 203 according to the first embodiment. The information processing apparatus 203 generates a camera path for the virtual camera based on a user operation and transmits the camera path to a virtual-viewpoint-image generating unit.

The individual functions of the information processing apparatus 203 will be described in sequence.

An operating-information acquisition unit 501 obtains a user operation, such as on the joystick 301, for each frame and converts the operation to parameters, such as the position and orientation of the virtual camera according to the amount of operation. The parameters represent the amount of change in the virtual camera parameters per frame. In response to a user operation (input), such as on the keyboard 302 or the GUI 308, the operating-information acquisition unit 501 transmits an input signal responsive to the operation to a control-mode determination unit 502, a key-frame holding unit 504, a clip creating unit 505, and a virtual-camera-parameter calculation unit 511.

The control-mode determination unit 502 switches a plurality of control modes according to a user operation. The control modes include a manual control mode, a clip playback mode, and a preset movement mode. In the manual control mode, the information processing apparatus 203 moves the virtual camera in response to a user operation on the joystick 301. In the clip playback mode, the information processing apparatus 203 plays back a virtual viewpoint image generated using a camera path generated for a clip video.

The virtual viewpoint image is generated by an external virtual-viewpoint-image generating unit (not shown). In the preset movement mode, the information processing apparatus 203 moves the position of the virtual camera to the preset position. In the preset movement mode, the information processing apparatus 203 generates a camera path for moving the position of the virtual camera to the preset position and plays back a virtual viewpoint image generated using the camera path on the display unit.

A control-mode holding unit 503 is a recording unit that holds (records) the current control mode. The held control mode is updated when a switching signal from the control-mode determination unit 502 is input. The control-mode holding unit 503 transmits the currently held control mode to the control-mode determination unit 502.

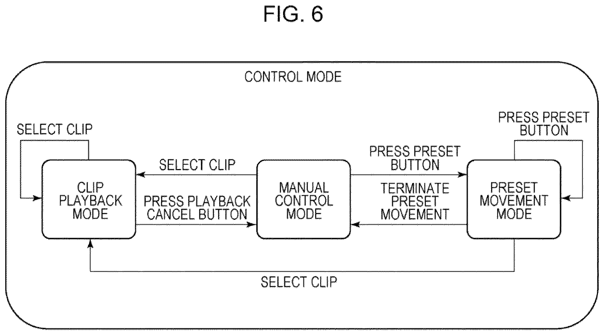

Fig. 6 illustrates a state transition diagram of the three control modes. In this embodiment, the manual control mode is normally set, in which the virtual camera is operated by the user. When a camera path in the clip list 310 is clicked by the user, the control-mode determination unit 502 switches the control mode to the clip playback mode and transmits a signal to indicate the switching of the modes to the control-mode holding unit 503 and the virtual-camera-parameter calculation unit 511. When any preset position on the preset list 312 is clicked by the user, the control-mode determination unit 502 switches the control mode to the preset movement mode and transmits a signal to indicate the switching of the modes to the control-mode holding unit 503 and the virtual-camera-parameter calculation unit 511. When the movement to the preset position ends while the control mode is the preset movement mode, the control-mode determination unit 502 receives a signal to switch to the manual control mode from the virtual-camera-parameter calculation unit 511 and switches the control mode to the manual control mode.

In response to a user input, such as to the key 303 on the keyboard 302, the key-frame holding unit 504 receives an input signal to register the key frame from the operating-information acquisition unit 501. The key 303 is assigned a command to register the key frame. In response to the input signal, the key-frame holding unit 504 obtains the current parameters of the virtual camera from the virtual-camera-parameter calculation unit 511 and holds the parameters as a key frame. The key-frame holding unit 504 can hold a plurality of key frames. Each key frame holds a key frame ID, which are integers, external parameters such as the position and orientation of the virtual camera, internal parameters such as an optical center and a focal length, and time information, such as time code, as parameters. The key frame ID is assigned to each key frame when the key-frame holding unit obtains the key frame. The key frame ID is a parameter that can be changed by the user. The held key frame is output to the clip creating unit 505 at a user input, such as to the key 304 on the keyboard 302, and is then cleared. The key 304 is assigned a command to generate a camera path for a clip video from the registered key frame.

In response to a user input, such as to the key 304 on the keyboard 302, the clip creating unit 505 receives an input signal from the operating-information acquisition unit 501. In response to the input signal, the clip creating unit 505 obtains a plurality of key frames held in the key-frame holding unit 504 and interpolates between the key frames to generate a camera path.

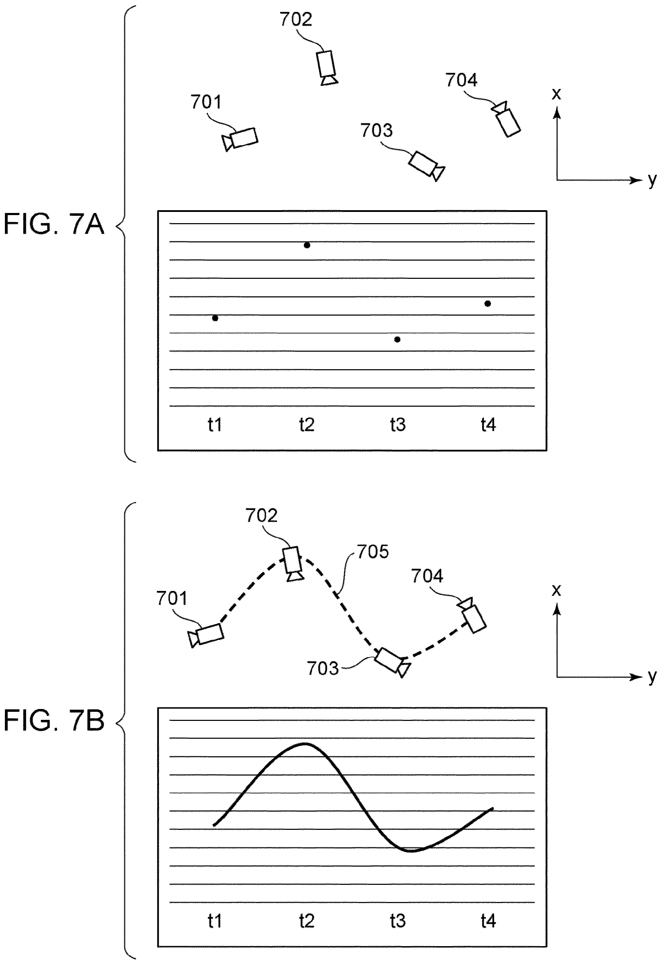

Figs. 7A and 7B are diagrams illustrating an example of a method for interpolating between key frames for the x-coordinate of the position coordinates of the virtual camera. In Fig. 7A, the positions and orientations of the virtual cameras at time code t1 to t4 are set as virtual cameras 701 to 704. The graph in Fig. 7A illustrates the x-coordinate of the virtual camera at time t1 to t4. As illustrated in Fig. 7B, the clip creating unit 505 generates a camera path 705 so as to interpolate between the virtual cameras 701 to 704 using an interpolation method to smooth the movement locus of the virtual camera. The graph in Fig. 7B illustrates the movement of the camera path 705 in the x-coordinate from time t1 to t4. One example of the interpolation method is spline interpolation. The clip creating unit 505 also performs interpolation for the y-coordinate and the z-coordinate of the position coordinates of the virtual camera, as well as orientation information, pan, tilt, and roll.

A clip holding unit 506 holds a camera path for a clip video generated by the clip creating unit 505. When any camera path on the clip list 310 is clicked (selected) by the user, the clip holding unit 506 transmits the selected camera path to the virtual-camera-parameter calculation unit 511 in response to an input signal received from the operating-information acquisition unit 501.

In response to a user input, such as to the key 305 on the keyboard 302, a preset holding unit 507 obtains the camera parameters of the virtual camera from the virtual-camera-parameter calculation unit 511 and holds the parameters as the preset position of the virtual camera. The key 305 is assigned a command to register the preset position.

The preset-movement-time holding unit 508 holds the movement time from the virtual camera position to the preset position. The movement time is registered (input) in advance by the user using the keyboard 302 or the like. The preset movement time differs from the time when the clip video is generated. For example, the preset movement time or movement time is a time, set by the user, for use in generating a camera path using a preset position (e.g. is a value of time set by the user for the virtual camera to move from a current position to the preset position).

A remaining-preset-movement-time holding unit 509 holds a remaining time to move to the preset position. The remaining-preset-movement-time holding unit 509 holds the preset movement time when the preset position in the preset list 312 of the GUI 308 is clicked (selected) by the user. Thereafter, the remaining-preset-movement-time holding unit 509 decreases the held remaining time by one frame every time one frame of the virtual viewpoint image is played back. The remaining-preset-movement-time holding unit 509 transmits the remaining time to a virtual-camera-parameter calculation unit 511 per frame.

A virtual-camera-parameter holding unit 510 obtains the virtual camera parameters calculated by the virtual-camera-parameter calculation unit 511 and holds the parameters. The virtual-camera-parameter holding unit 510 transmits the virtual camera parameters held at the current time code to the virtual-camera-parameter calculation unit 511. Thereafter, the virtual-camera-parameter holding unit 510 obtains the virtual camera parameters of the next frame calculated by the virtual-camera-parameter calculation unit 511 and updates the held virtual camera parameters.

When the control mode is updated, the virtual-camera-parameter calculation unit 511 receives a signal from the control-mode determination unit 502 and calculates virtual camera parameters using a method matching the control mode. Methods for calculating the virtual camera parameters for the individual control modes will be described hereinbelow.

In the manual control mode, the virtual-camera-parameter calculation unit 511 adds up the amount of change in the virtual camera parameters obtained from the operating-information acquisition unit 501 and the camera parameters obtained from the virtual-camera-parameter holding unit 510 to calculate the virtual camera parameters of the next frame.

In the clip playback mode, the virtual-camera-parameter calculation unit 511 obtains clip information selected by the user from the operating-information acquisition unit 501 to obtain a corresponding camera path from the clip holding unit 506. The obtained camera path is a camera path generated using the key frames.

In the preset movement mode, the virtual-camera-parameter calculation unit 511 calculates a camera path from the current position and orientation of the virtual camera to the preset position. Specifically, if the frame rate is 60 fps, the virtual-camera-parameter calculation unit 511 calculates the camera path using Math. 1.

Math. 1

$$dp = (p\_pre − p(t))/f(t)$$

$$p(t − 1) = p(t) + dp$$

$$f(t − 1) = f(t) − 1$$

where t is the time (remaining time) taken to move the virtual camera from the current position to the preset position, obtained from the remaining-preset-movement-time holding unit 509. In this embodiment, t is expressed, for example, in the form of HH:MM:SS:FF, p(t) is the virtual camera parameter at the current time obtained from the virtual-camera-parameter holding unit 510 at remaining time t, and p_pre is the virtual camera parameter of the preset position obtained from the preset holding unit 507, and f(t) is the number of remaining frames at remaining time t. The initial value of f(t) is obtained by multiplying the initial value of remaining time t converted into seconds (e.g. the initial value is the value of the preset movement time preset by the user) by the frame rate. The value dp is the amount of change in the virtual camera parameter per frame. Accordingly, dp can take either a positive value or a negative value. At t = 0, the virtual-camera-parameter calculation unit 511 transmits a signal to switch to the manual control mode to the control-mode determination unit 502. If the frame rate is a non-integer, such as 59.94 fps, the virtual-camera-parameter calculation unit 511 performs the calculation of the above equations in consideration of drop frames.

In the preset movement mode, the virtual-camera-parameter calculation unit 511 obtains the virtual camera parameters of the preset position from the preset holding unit 507 and virtual camera parameters from the virtual-camera-parameter holding unit 510. Then, the orientation parameters of the virtual camera are corrected so that the path between the two points is the shortest.

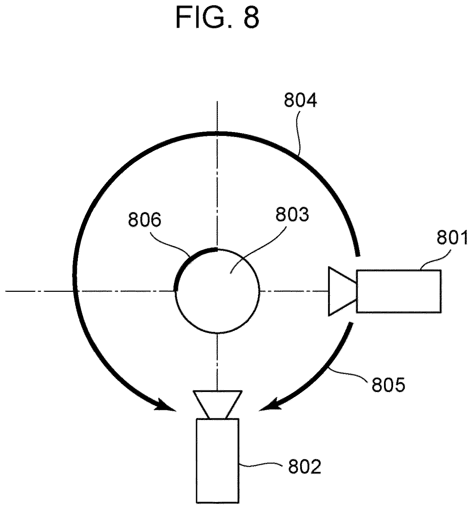

A method for correcting the orientation parameters of the virtual camera will be described with reference to Fig. 8. For example, a camera path for moving the virtual camera from a virtual camera position 801 to a preset position 802 in Fig. 8 is to be generated. The values of pan at the virtual camera position 801 and the preset position 802 when the virtual camera is rotated while facing the point of gaze 803 are set at 0°, 270°, respectively. If the path between the virtual camera position 801 and the preset position 802 is interpolated using the same method as the key frame interpolation, the value of pan increases monotonically from 0° to 270°, and the camera path of the virtual camera takes a path 804. However, in this embodiment, the preset position is used to move the virtual camera to a desired position quickly in real-time video. In other words, the camera path indicated by the path 804 is a roundabout camera path from the virtual camera position 801 to the preset position 802, which is not an appropriate camera path. A desirable camera path from the virtual camera position 801 to the preset position 802 is a path 805. For this reason, the virtual-camera-parameter calculation unit 511 corrects the values of pan, tilt, and roll, which are parameters representing the orientation of the virtual camera, with the current position and orientation of the virtual camera position 801 fixed. Specifically, if the absolute value of the difference in the value of pan, tilt, or roll between the current position and the preset position of the virtual camera is greater than 180°, the virtual-camera-parameter calculation unit 511 corrects the value.

For example, the virtual-camera-parameter calculation unit 511 corrects the orientation parameters of the current virtual camera position whose difference from the preset position is greater than 180° to decrease the absolute value of the difference to 180° or less. Specifically, for the parameters, if the value of the current virtual camera position is greater than the value at the preset position by 180°, the virtual-camera-parameter calculation unit 511 subtracts an integral multiple of 360° from the value of the current camera path position so that the difference falls to 180° or less. In contrast, for the parameters, if the value of the current position of the virtual camera is less than the value of the preset position by 180° or more, the virtual-camera-parameter calculation unit 511 adds an integral multiple of 360° to the value of the current camera path position so that the difference falls to 180° or less. Thus, the virtual-camera-parameter calculation unit 511 can correct the orientation parameters of the virtual camera by adding or subtracting a multiple of 360° to or from the parameters to be corrected without changing the position and orientation of the virtual camera. In addition, by decreasing the difference to 180° or less as described above, a camera path that does not take a detour can be generated.

The virtual-camera-parameter calculation unit 511 transmits the corrected camera parameters to a virtual-camera-parameter providing unit 512.

The virtual-camera-parameter providing unit 512 obtains camera parameters for each frame from the virtual-camera-parameter calculation unit 511 and transmits the camera parameters to the virtual-viewpoint-image generating unit.

A time-code holding unit 513 obtains the current time code from a time-code calculation unit 514 and holds the time code.

The time-code calculation unit 514 obtains a time code (e.g. time information) for each frame from the time-code holding unit 513, updates the time codes, and transmits the time codes to the time-code holding unit 513 and a time-code providing unit 515.

The time-code providing unit 515 obtains the time codes from the time-code calculation unit 514 and transmits the time codes to the virtual-viewpoint-image generating unit.

A display 516 displays a virtual viewpoint image generated by the virtual-viewpoint-image generating unit. Examples of the display 516 include a liquid crystal display and an organic electroluminescence (EL) display.

The information processing apparatus 203 communicates with the image processing apparatus 202 using the communication unit 405. The communication unit communicates in accordance with a wired communication standard such as Ethernet or a wireless communication standard such as Wi-Fi®.

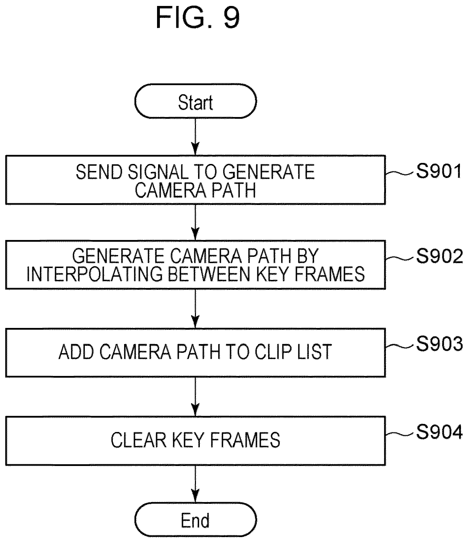

Referring next to Fig. 9, a processing procedure for generating a camera path for clip video in this embodiment will be described. This flowchart is started when the key 304 on the keyboard 302 is pressed by the user. The key 304 is assigned a command to generate a camera path for clip video from the registered key frames.

In step S901, the operating-information acquisition unit 501 transmits a signal to generate a camera path to the clip creating unit 505.

In step S902, the clip creating unit 505 receives the signal to generate a camera path from the operating-information acquisition unit 501 and obtains key frames from the key-frame holding unit 504. The clip creating unit 505 generates a camera path by interpolating between the key frames in order of the key frame IDs as discussed above.

In step S903, the clip holding unit 506 obtains the camera path from the clip creating unit 505 and adds the obtained camera path to the clip list 310.

In step S904, in response to the addition of the generated camera path to the clip list 310, the key-frame holding unit 504 clears the held key frames (the key-frame list).

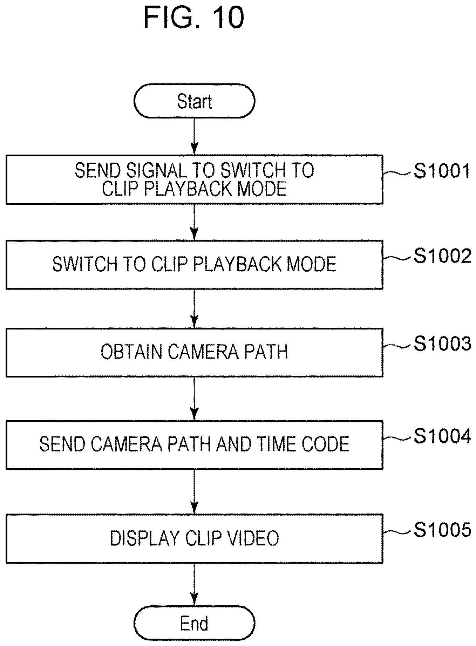

Next, a processing procedure for playing back clip video in this embodiment will be described with reference to Fig. 10. This flowchart is started when the user clicks any camera path from the clip list 310 on the GUI 308. The user operation of clicking any camera path is an operation for playing back clip video.

In step S1001, the operating-information acquisition unit 501 transmits a signal to switch the control mode to the clip playback mode to the control-mode determination unit 502.

In step S1002, the control-mode determination unit 502 receives the signal from the operating-information acquisition unit 501 and switches the control mode to the clip playback mode. The control-mode determination unit 502 transmits a signal indicating the switching to the clip playback mode to the control-mode holding unit 503 and the virtual-camera-parameter calculation unit 511.

In step S1003, the virtual-camera-parameter calculation unit 511 obtains the clip information selected by the user from the operating-information acquisition unit 501 and obtains a corresponding camera path from the clip holding unit 506. The virtual-camera-parameter calculation unit 511 transmits the obtained camera path to the virtual-camera-parameter providing unit 512.

In step S1004, the virtual-camera-parameter providing unit 512, which has received the camera path, transmits the camera path to the virtual-viewpoint-image generating unit. The time-code providing unit 515 also obtains a time code from the time-code calculation unit 514 and transmits the time code to the virtual-viewpoint-image generating unit. Here, the virtual-viewpoint-image generating unit generates a virtual viewpoint image. The information processing apparatus 203 transmits the camera path and the time code via the communication unit 405.

In step S1005, the display 516 displays the virtual viewpoint image obtained from the virtual-viewpoint-image generating unit. The displayed virtual viewpoint image corresponds to the clip video.

Here, the information processing apparatus 203 obtains (receives) the virtual viewpoint image via the communication unit.

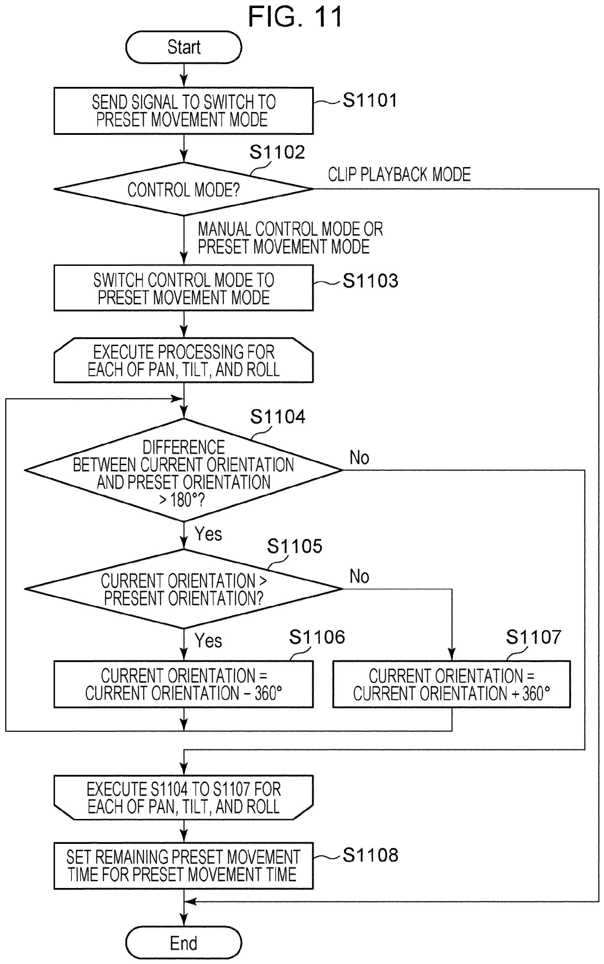

Referring next to Fig. 11, a processing procedure performed when the user selects (presses) any preset position on the preset list 312 on the GUI 308 in this embodiment will be described. The processing of this flowchart is started when the user selects any preset position.

In step S1101, the operating-information acquisition unit 501 transmits a signal to switch the control mode to the preset movement mode to the control-mode determination unit 502.

In step S1102, in response to receiving the signal to switch the control mode to the preset movement mode from the operating-information acquisition unit 501, the control-mode determination unit 502, obtains information on the current control mode from the control-mode holding unit 503. If the current control mode is the clip playback mode, the processes from S1103 onward are not performed. If the current control mode is the manual control mode or the preset movement mode, the control-mode determination unit 502 performs the process of step S1103.

If the control mode is the manual control mode, then in step S1103 the control-mode determination unit 502 switches the control mode to the preset movement mode. If the control mode is the preset movement mode, the control-mode determination unit 502 keeps the preset movement mode. The control-mode determination unit 502 transmits a signal indicating the switching to the preset movement mode to the control-mode determination unit 502 and the virtual-camera-parameter calculation unit 511.

In step S1104, the virtual-camera-parameter calculation unit 511 receives the signal to indicate the switching to the preset movement mode from the control-mode determination unit 502. The virtual-camera-parameter calculation unit 511 obtains the camera parameters of the preset position selected by the user from the preset holding unit 507. The virtual-camera-parameter calculation unit 511 also obtains the current camera parameters from the virtual-camera-parameter holding unit 510. The virtual-camera-parameter calculation unit 511 calculates the absolute value of the difference, for each of the obtained parameters (pan, tilt, and roll) of the orientations, and determines whether the value is greater than 180°. In the flowchart, for the parameters, the value of the current virtual camera position is referred to as current orientation, and the value of the preset position is referred to as preset orientation.

If in step S1104 there are parameters whose absolute values of the difference are greater than 180°, then in step S1105 the virtual-camera-parameter calculation unit 511 compares the value of the preset position and the value of the current virtual camera position for each of the parameters. For each parameter, if the value of the current virtual camera position is greater than the value of the preset position, the process of step S1106 is executed. If the value of the parameter of the current virtual camera position is less than or equal to the value of the preset position, the process of step S1107 is executed.

In step S1106, the virtual-camera-parameter calculation unit 511 subtracts 360° from the value of the current virtual camera position, for each parameter, and substitutes the obtained value for the value of the virtual camera position held by the virtual-camera-parameter holding unit 510.

In step S1107, the virtual-camera-parameter calculation unit 511 adds 360° to the value of the current virtual camera position, for each parameter, and substitutes the obtained value for the value of the virtual camera position held by the virtual-camera-parameter holding unit 510.

The processes from step S1104 to S1107 are repeated until, for each of the parameters of pan, tilt, and roll, the difference between the value held by the virtual-camera-parameter holding unit 510 and the value of the preset position falls to 180° or less. Thus, for the parameters of pan, tilt, and roll, an integral multiple of 360° is added or subtracted to/from the value of the camera path position.

In step S1108, the remaining-preset-movement-time holding unit 509 obtains the preset movement time from the preset-movement-time holding unit 508 and sets the preset movement time for the remaining time to move to the preset position.

The above processes from step S1101 to step S1108 are performed before the current virtual camera is changed to the preset state.

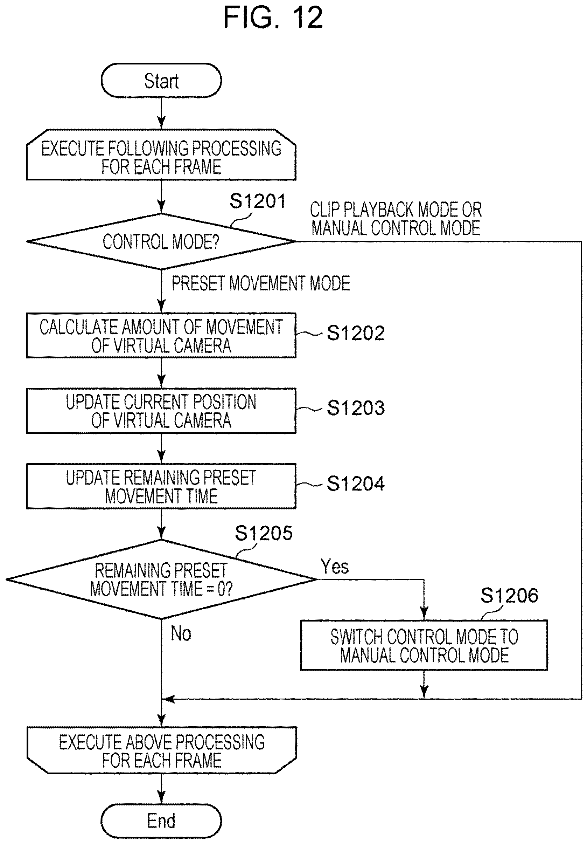

A processing procedure for changing the virtual camera to the preset state will be described with reference to the flowchart of Fig. 12. The processing of this flowchart is executed next to the flowchart of Fig. 11. The following processing is executed for each frame.

In step S1201, the control-mode determination unit 502 obtains information on the current control mode from the control-mode holding unit 503. If the control mode is the clip playback mode or the manual control mode, the following processes are not performed, and the processing goes to the processing for the next frame. If the control mode is the preset movement mode, the process of step S1202 is executed.

In step S1202, the virtual-camera-parameter calculation unit 511 obtains the camera parameters of the preset position, the camera parameters of the current virtual camera position, and the remaining movement time to calculate the amount of movement per frame.

In step S1203, the virtual-camera-parameter calculation unit 511 obtains the camera parameters of the current virtual camera position from the virtual-camera-parameter holding unit 510 and transmits a new camera parameter position to which the amount of movement is added to the virtual-camera-parameter holding unit 510.

In step S1204, the remaining-preset-movement-time holding unit 509 subtracts the time corresponding to one frame from the remaining movement time to update the held remaining present movement time.

In step S1205, the virtual-camera-parameter calculation unit 511 obtains the remaining preset movement time from the remaining-preset-movement-time holding unit 509. If the remaining preset movement time is 0, the process of step S1206 is executed. If the remaining preset movement time is not 0, the process for the next frame is executed.

If the remaining preset movement time that the virtual-camera-parameter calculation unit 511 obtained is 0, then in step S1206 the virtual-camera-parameter calculation unit 511 transmits a signal to switch the control mode to the manual control mode to the control-mode determination unit 502. The control-mode determination unit 502, which has received the signal, switches the control mode to the manual control mode. After switching the control mode to the manual control mode, the control-mode determination unit 502 transmits the current control mode (the manual control mode) to the control-mode holding unit 503.

The above processing procedure is executed for each frame to move the position of the virtual camera to the preset position.

This embodiment shows an example in which the interpolation procedure (a method for generating a camera path) is selected between generation of a camera path for clip video and movement to the preset position. In other words, in the movement to the preset position, adding a camera parameter correction process so that the difference in orientation parameter between two points falls to 180° or less prevents the camera path from becoming redundant, thereby generating a short path.

Second Embodiment

Next, a second embodiment of the present invention will be described in detail.

In the first embodiment, as illustrated in Fig. 8, the information processing apparatus 203 performs the process of correcting the parameters to move from the current virtual camera position 801 to the preset position 802 so as to decrease the path in real-time video. However, some user may want to move the virtual camera along the camera path while imaging some area, not simply passing through a short path. For example, the display target, which is present in a subject region 806 at the point of gaze 803, cannot be viewed from the virtual camera passing through the path 805. In this case, the path 804 may be desirable for the user.

In contrast, a short path may be desirable, such as when the virtual camera is moved to the preset position not using a normal interpolation procedure in generating clip video.

For this reason, in second embodiment, the procedure of interpolation between key frames and the procedure for interpolation between the current position and the preset position can be selected by the user, and the camera path is automatically generated according to the selected interpolation method.

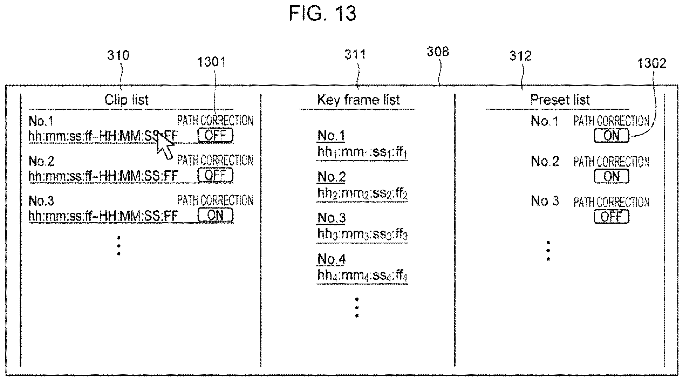

Fig. 13 illustrates an example of the GUI in the second embodiment. In Fig. 13, the components having the same functions as the functions of the GUI in Fig. 3 are denoted by the same reference signs, and only the difference from the first embodiment will be described.

The camera paths in the clip list 310 and the preset positions in the preset list 312 are each assigned a button 1301 and a button 1302 indicating whether to correct the parameter for making the path shortest, respectively. The user can switch the ON/OFF of parameter correction by clicking the button 1301 or the button 1302. If the parameter correction is ON, the information processing apparatus 203 performs the process of correcting the parameters of pan, tilt, and roll of the current virtual camera so that the difference in the values of the parameters between the present virtual camera and the current virtual camera falls to 180° or less, as in the first embodiment. The information processing apparatus 203 generates a camera path using the corrected parameters. If the correction of the parameters is OFF, the information processing apparatus 203 generates a camera path without correcting the parameters.

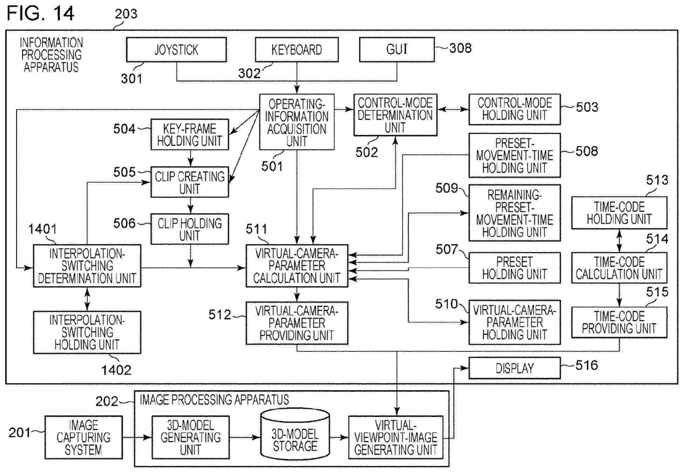

Fig. 14 is a block diagram illustrating the functional configuration of the information processing apparatus 203 according to the second embodiment. The information processing apparatus 203 generates a camera path for the virtual camera using a method selected by the user and transmits the camera path to the virtual-viewpoint-image generating unit. In Fig. 14, the components having the same functions as the functions of the information processing apparatus 203 in Fig. 5 are denoted by the same reference signs, and only the difference from the first embodiment will be described.

In response to receiving information on a user input, such as to the button 1301 on the GUI 308, the operating-information acquisition unit 501 transmits a signal to switch the ON/OFF of parameter correction to an interpolation-switching determination unit 1401 and the virtual-camera-parameter calculation unit 511.

The interpolation-switching determination unit 1401 receives the signal to switch the ON/OFF of parameter correction from the operating-information acquisition unit 501. Thereafter, the interpolation-switching determination unit 1401 switches the ON/OFF of parameter correction and transmits the switched setting to an interpolation-switching holding unit 1402. The interpolation-switching determination unit 1401 obtains the current ON/OFF information from the interpolation-switching holding unit 1402 and transmits the information to the virtual-camera-parameter calculation unit 511.

The interpolation-switching holding unit 1402 transmits the ON/OFF information to the interpolation-switching determination unit 1401. When the ON/OFF is changed by the interpolation-switching determination unit 1401, the interpolation-switching holding unit 1402 obtains the information from the interpolation-switching determination unit 1401 and holds the information.

In response to receiving the signal to switch the ON/OFF of parameter correction from the operating-information acquisition unit 501, the virtual-camera-parameter calculation unit 511 obtains the information on the ON/Off of parameter correction from the interpolation-switching determination unit 1401. If the virtual-camera-parameter calculation unit 511 obtains information of parameter correction ON, then the virtual-camera-parameter calculation unit 511 corrects the orientation parameters of the virtual camera so as to interpolate between key frames or the path from the current virtual camera position to the preset position to achieve the shortest path, as described in the first embodiment. If the virtual-camera-parameter calculation unit 511 obtains information of parameter correction OFF, then the virtual-camera-parameter calculation unit 511 interpolates between key frames or the path from the current virtual camera position to the preset position without correcting the orientation parameters.

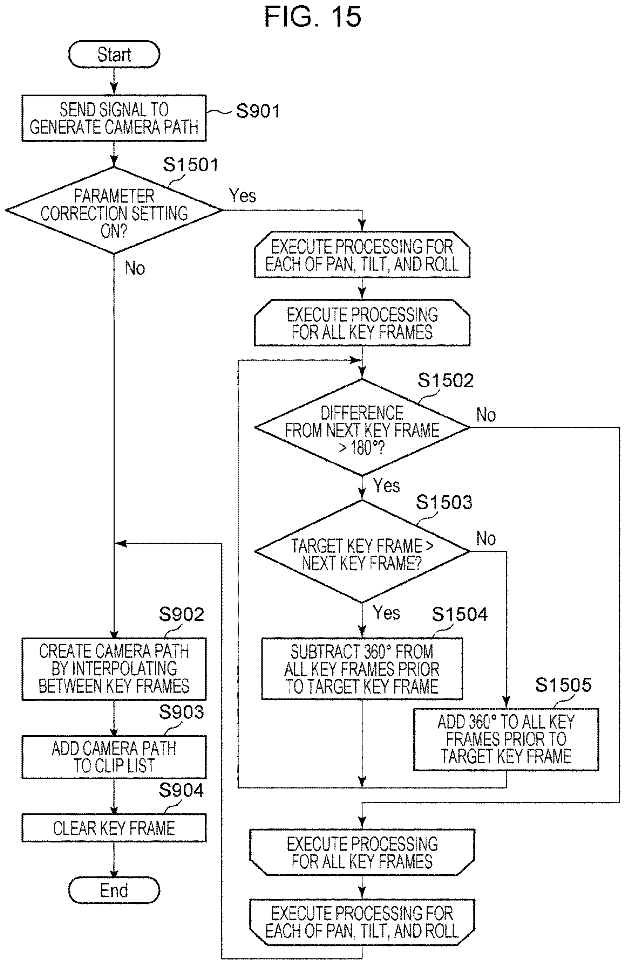

Referring next to Fig. 15, a processing procedure for generating a camera path for clip video in this embodiment will be described. In Fig. 15, the processes for the same functions as the functions of the processing procedure in Fig. 9 are denoted by the same reference signs, and only the difference from the first embodiment will be described.

In step S1501, the interpolation-switching determination unit 1401 obtains ON/OFF information on current parameter correction setting from the interpolation-switching holding unit 1402 and transmits the information to the clip creating unit 505. If the parameter correction setting is ON, the process of step S1502 is executed. If the parameter correction setting is OFF, the process of step S902 is executed.

In step S1502, the clip creating unit 505 obtains a list of key frames from the key-frame holding unit 504. The difference between the value of a key frame and the value of the key frame with the next frame ID is taken in the order of frame IDs for each of pan, tilt, and roll.

If the absolute value of the difference between the target key frame and the next key frame for each of pan, tilt, and roll is greater than 180°, then in step S1503 the clip creating unit 505 determines which key frame value is greater for each parameter. If the difference between the absolute values is less than or equal to 180°, the processing goes to a process for the next frame.

If the value of the target key frame is greater for each of pan, tilt, and roll, then in step S1504, the clip creating unit 505 subtracts 360° from the values of all the key frames prior to the target key frame.

If the value of the target key frame is greater for each of pan, tilt, and roll, then in S1505, the clip creating unit 505 adds 360° to all the key frames prior to the target key frame.

The processes from step S1502 to S1505 are repeated until the difference between two key frames falls below 180° for each of the parameters of pan, tilt, and roll. Thus, an integral multiple of 360° is added or subtracted to/from the value of the target key frame for each of the parameters of pan, tilt, and roll.

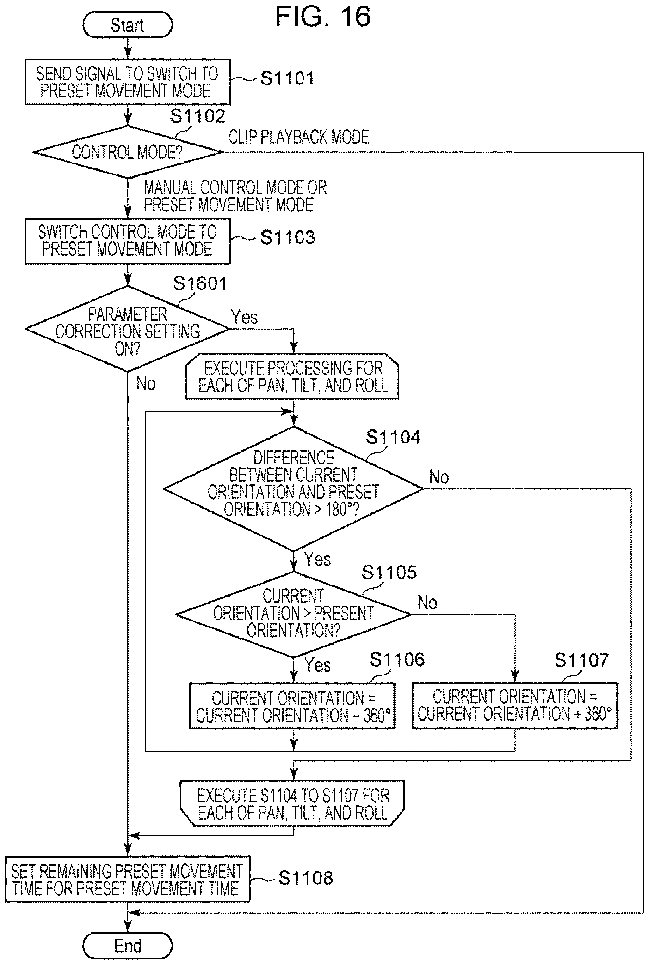

Referring next to Fig. 16, a processing procedure when the user presses any preset position on the preset list 312 on the GUI 308 in this embodiment will be described. In Fig. 16, the processes for the same functions as the functions of the processing procedure in Fig

11 are denoted by the same reference signs, and only the difference from the first embodiment will be described.

In step S1601, the interpolation-switching determination unit 1401 obtains ON/OFF information on the current parameter correction setting from the interpolation-switching holding unit 1402 and transmits the information to the virtual-camera-parameter calculation unit 511. If the parameter correction setting is ON, the process of step S1104 is executed. If the parameter correction setting is OFF, the process of step S1108 is executed.

In this embodiment, user input means, such as buttons on the GUI 308, are provided to enable a user to select whether to correct the parameters of the virtual camera for all camera paths for clip video and the preset position so that a camera path can be generated using different interpolation procedures depending on the selection of the user. This allows automatic generation of a camera path desired by the user even when the user wants to interpolate between key frames so as to make the path shortest or when the user wants to take a non-shortest path to the preset position.

In the above embodiments, at least one of A and B may be A or B, or may include A and B.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like. While the present invention has been described with reference to example embodiments, it is to be understood that the invention is not limited to the disclosed example embodiments. The scope of the following claims is to be accorded the broadest interpretation so as to encompass all such modifications and equivalent structures and functions.

## Claims

1. An information processing apparatus (203) comprising:

   one or more memories storing instructions; and
   one or more processors configured to execute the instructions to:

   obtain a user operation;
   set, based on the obtained user operation, positions and orientations of a plurality of virtual cameras in a virtual viewpoint image generated from a plurality of images captured by a plurality of image capturing apparatuses;
   generate a camera path from the positions and the orientations of the plurality of virtual cameras; and
   select a procedure for generating the camera path between generating the camera path using the set positions and orientations of the plurality of virtual cameras and generating the camera path using the set positions and orientations of the virtual cameras and a preset position and orientation of a virtual camera.

2. The information processing apparatus (203) according to Claim 1, wherein the one or more processors are further configured to execute the instructions to generate the camera path so as to be shorter when using the preset position than when using the positions of the virtual cameras for generating the virtual viewpoint image.

3. The information processing apparatus (203) according to Claim 1, wherein the one or more processors are further configured to execute the instructions to hold information on the positions of the virtual cameras, IDs, time information, and orientation information on the virtual cameras.

4. The information processing apparatus (203) according to Claim 1, wherein the one or more processors are further configured to execute the instructions to hold information on the positions of the virtual cameras, IDs, time information, and orientation information on the virtual cameras for each frame of one or more frames for a camera path.

5. The information processing apparatus (203) according to Claim 3 or Claim 4, wherein the one or more processors are further configured to execute the instructions to generate a camera path by interpolating the positions of the virtual cameras in order of the IDs.

6. The information processing apparatus (203) according to Claim 3 or Claim 4, wherein the one or more processors are further configured to execute the instructions to:

   further holds movement time for generating a camera path using the preset position, the movement time being different from the time information;
   when generating the camera path using the positions of the virtual cameras for generating the virtual viewpoint image, generate the camera path based on the time information recorded together with the positions of the virtual cameras for generating the virtual viewpoint image; and
   when generating the camera path using the preset position, generate the camera path based on the movement time.

7. The information processing apparatus (203) according to any one of the preceding Claims, wherein the one or more processors are further configured to execute the instructions to, when generating the camera path using the preset position, correct the positions of the virtual cameras based on the preset position.

8. The information processing apparatus (203) according to Claim 7, wherein the one or more processors are further configured to execute the instructions to:

   determine whether the difference between absolute value of the current position of the virtual camera and the absolute value of the preset position of the virtual camera is greater than 180°;
   when the difference between absolute value of the current position of the virtual camera and the absolute value of the preset position of the virtual camera is determined to be greater than 180°, when generating the camera path using the preset position, correct the positions of the virtual cameras based on the preset position to decrease the absolute value of the difference to 180° or less.

9. The information processing apparatus (203) according to Claim 7 or Claim 8, wherein the one or more processors are further configured to execute the instructions to determine whether or not to correct the positions of the virtual cameras based on a user operation or based on a preset user operation.

**EP 4 451 667 A1**

10. The information processing apparatus (203) according to any one of the preceding Claims, wherein the one or more processors are further configured to execute the instructions to switch, based on the user operation, between a control mode for generating the camera path using the positions of the virtual cameras for generating the virtual viewpoint image and a control mode for generating the camera path using the preset position.

11. A method for controlling an information processing apparatus (203), the method comprising:

> obtaining a user operation;
> setting, based on the obtained user operation, positions and orientations of a plurality of virtual cameras in a virtual viewpoint image generated from a plurality of images captured by a plurality of image capturing apparatuses;
> generating a camera path from the positions and the orientations of the plurality of virtual cameras; and
> selecting a procedure for generating the camera path between generating the camera path using the set positions and orientations of the plurality of virtual cameras and generating the camera path using the set positions and orientations of the virtual cameras and a preset position and orientation of a virtual camera.

12. A non-transitory recording medium storing a program for causing an information processing apparatus (203) to execute a control method, the control method comprising:

> obtaining a user operation;
> setting, based on the obtained user operation, positions and orientations of a plurality of virtual cameras in a virtual viewpoint image generated from a plurality of images captured by a plurality of image capturing apparatuses;
> generating a camera path from the positions and the orientations of the plurality of virtual cameras; and
> selecting a procedure for generating the camera path between generating the camera path using the set positions and orientations of the plurality of virtual cameras and generating the camera path using the set positions and orientations of the virtual cameras and a preset position and orientation of a virtual camera.

# FIG. 1

# FIG. 2

20

IMAGE PROCESSING SYSTEM

| IMAGE CAPTURING SYSTEM | → | IMAGE PROCESSING APPARATUS | ⇄ | INFORMATION PROCESSING APPARATUS |

201                    202                    203

# FIG. 3A

307
308
309

| Preset list | Key frame list | Clip list |
|---|---|---|
| No.1 | $hh_1:mm_1:ss_1:ff_1$ | No.1 hh:mm:ss:ff–HH:MM:SS:FF |
| No.2 | $hh_2:mm_2:ss_2:ff_2$ | No.2 hh:mm:ss:ff–HH:MM:SS:FF |
| No.3 | $hh_3:mm_3:ss_3:ff_3$ | No.3 hh:mm:ss:ff–HH:MM:SS:FF |
| | $hh_4:mm_4:ss_4:ff_4$ | |

301a

301b

303 304 305 306 302

# FIG. 3B

310 311 308 312

| Clip list | Key frame list | Preset list |
|---|---|---|
| No.1 hh:mm:ss:ff–HH:MM:SS:FF | No.1 $hh_1:mm_1:ss_1:ff_1$ | No.1 |
| No.2 hh:mm:ss:ff–HH:MM:SS:FF | No.2 $hh_2:mm_2:ss_2:ff_2$ | No.2 |
| No.3 hh:mm:ss:ff–HH:MM:SS:FF | No.3 $hh_3:mm_3:ss_3:ff_3$ | No.3 |
| | No.4 $hh_4:mm_4:ss_4:ff_4$ | |

# FIG. 4

203

INFORMATION PROCESSING APPARATUS

| 401 | 402 | 403 |
|-----|-----|-----|
| CPU | RAM | ROM |

405

COMMUNICATION UNIT

404

INPUT/ OUTPUT UNIT

## FIG. 5

FIG. 6

CONTROL MODE

SELECT CLIP

CLIP PLAYBACK MODE

SELECT CLIP

PRESS PLAYBACK CANCEL BUTTON

MANUAL CONTROL MODE

PRESS PRESET BUTTON

TERMINATE PRESET MOVEMENT

PRESS PRESET BUTTON

PRESET MOVEMENT MODE

SELECT CLIP

FIG. 7A

FIG. 7B

# FIG. 8

# FIG. 9

```
                    ┌─────────────┐
                    │    Start     │
                    └──────┬──────┘
                           │
                           ▼
        ┌──────────────────────────────────┐
        │   SEND SIGNAL TO GENERATE         │────  S901
        │        CAMERA PATH                │
        └──────────────────┬───────────────┘
                           │
                           ▼
        ┌──────────────────────────────────┐
        │   GENERATE CAMERA PATH BY         │────  S902
        │ INTERPOLATING BETWEEN KEY FRAMES  │
        └──────────────────┬───────────────┘
                           │
                           ▼
        ┌──────────────────────────────────┐
        │   ADD CAMERA PATH TO CLIP LIST    │────  S903
        └──────────────────┬───────────────┘
                           │
                           ▼
        ┌──────────────────────────────────┐
        │        CLEAR KEY FRAMES           │────  S904
        └──────────────────┬───────────────┘
                           │
                           ▼
                    ┌─────────────┐
                    │     End      │
                    └─────────────┘
```

# FIG. 10

```
        ┌─────────────┐
        │    Start    │
        └─────────────┘
               │
               ▼
┌───────────────────────────────┐
│     SEND SIGNAL TO SWITCH TO  │ ── S1001
│       CLIP PLAYBACK MODE      │
└───────────────────────────────┘
               │
               ▼
┌───────────────────────────────┐
│   SWITCH TO CLIP PLAYBACK MODE │ ── S1002
└───────────────────────────────┘
               │
               ▼
┌───────────────────────────────┐
│        OBTAIN CAMERA PATH     │ ── S1003
└───────────────────────────────┘
               │
               ▼
┌───────────────────────────────┐
│   SEND CAMERA PATH AND TIME CODE │ ── S1004
└───────────────────────────────┘
               │
               ▼
┌───────────────────────────────┐
│        DISPLAY CLIP VIDEO     │ ── S1005
└───────────────────────────────┘
               │
               ▼
        ┌─────────────┐
        │     End     │
        └─────────────┘
```

# FIG. 11

```
                    ┌─────────────┐
                    │    Start    │
                    └──────┬──────┘
                           │
                           ▼
            ┌──────────────────────────────┐
            │ SEND SIGNAL TO SWITCH TO     │── S1101
            │ PRESET MOVEMENT MODE         │
            └──────────────┬───────────────┘
                           │         S1102
                           ▼
                                             CLIP PLAYBACK MODE
            ◇ CONTROL MODE? ◇ ─────────────────────────────────┐
                           │                                    │
            MANUAL CONTROL MODE OR                              │
            PRESET MOVEMENT MODE                                │
                           │                                    │
                           ▼                                    │
            ┌──────────────────────────────┐                   │
            │ SWITCH CONTROL MODE TO       │── S1103           │
            │ PRESET MOVEMENT MODE         │                   │
            └──────────────┬───────────────┘                   │
                           │                                    │
                           ▼                                    │
            ┌──────────────────────────────┐                   │
            │ EXECUTE PROCESSING FOR       │                   │
            │ EACH OF PAN, TILT, AND ROLL  │                   │
            └──────────────┬───────────────┘                   │
                           │          S1104                     │
                           ▼                                    │
                    DIFFERENCE                                  │
              BETWEEN CURRENT ORIENTATION    No                 │
                AND PRESET ORIENTATION ─────────────┐           │
                      > 180°?                        │          │
                           │ Yes                     │          │
                           ▼        S1105            │          │
                                              No     │          │
            CURRENT ORIENTATION >  ──────────┐      │          │
            PRESENT ORIENTATION?              │      │          │
                           │ Yes              │      │          │
              S1106        ▼           S1107  ▼      │          │
            ┌──────────────────────┐  ┌──────────────────────┐ │
            │ CURRENT ORIENTATION =│  │ CURRENT ORIENTATION =│ │
            │ CURRENT ORIENTATION  │  │ CURRENT ORIENTATION  │ │
            │ – 360°               │  │ + 360°               │ │
            └──────────┬───────────┘  └──────────┬───────────┘ │
                       │                         │             │
                       └───────────┬─────────────┘             │
                                   ▼                           │
            ┌──────────────────────────────┐                   │
            │ EXECUTE S1104 TO S1107 FOR   │                   │
            │ EACH OF PAN, TILT, AND ROLL  │                   │
            └──────────────┬───────────────┘                   │
                           ▼                                    │
            ┌──────────────────────────────┐                   │
            │ SET REMAINING PRESET MOVEMENT │── S1108          │
            │ TIME FOR PRESET MOVEMENT TIME │                  │
            └──────────────┬───────────────┘                   │
                           │◄───────────────────────────────────┘
                           ▼
                    ┌─────────────┐
                    │     End     │
                    └─────────────┘
```

EP 4 451 667 A1

# FIG. 12

```
          ┌─────────────┐
          │    Start    │
          └──────┬──────┘
                 ▼
    ┌─────────────────────────────┐
    │ EXECUTE FOLLOWING PROCESSING │
    │       FOR EACH FRAME         │
    └──────────────┬──────────────┘
                   ▼                  S1201      CLIP PLAYBACK MODE OR
            ◇─────────────◇                      MANUAL CONTROL MODE
            ◇ CONTROL MODE? ◇ ─────────────────────────────────────┐
            ◇─────────────◇                                         │
                   │                                                │
          PRESET MOVEMENT MODE                                      │
                   ▼                                                │
    ┌─────────────────────────────┐                                │
    │ CALCULATE AMOUNT OF MOVEMENT │ ── S1202                       │
    │     OF VIRTUAL CAMERA        │                                │
    └──────────────┬──────────────┘                                │
                   ▼                                                │
    ┌─────────────────────────────┐                                │
    │   UPDATE CURRENT POSITION    │ ── S1203                       │
    │      OF VIRTUAL CAMERA       │                                │
    └──────────────┬──────────────┘                                │
                   ▼                                                │
    ┌─────────────────────────────┐                                │
    │  UPDATE REMAINING PRESET     │ ── S1204                       │
    │       MOVEMENT TIME          │                                │
    └──────────────┬──────────────┘                                │
                   ▼            S1205                               │
            ◇──────────────◇                                        │
            ◇ REMAINING PRESET ◇      Yes                           │
            ◇ MOVEMENT TIME = 0? ◇ ──────────┐                      │
            ◇──────────────◇                 │         S1206        │
                   │ No                       ▼                     │
                   │              ┌─────────────────────────┐       │
                   │              │  SWITCH CONTROL MODE TO  │       │
                   │              │    MANUAL CONTROL MODE   │       │
                   │              └────────────┬────────────┘       │
                   │◄──────────────────────────┴─────────────────────┘
                   ▼
    ┌─────────────────────────────┐
    │  EXECUTE ABOVE PROCESSING    │
    │       FOR EACH FRAME         │
    └──────────────┬──────────────┘
                   ▼
          ┌─────────────┐
          │     End     │
          └─────────────┘
```

FIG. 13

**FIG. 14**

# FIG. 15

```
                          ( Start )
                             │
                             ▼
              ┌──────────────────────────┐
              │     SEND SIGNAL TO       │──── S901
              │  GENERATE CAMERA PATH    │
              └──────────────────────────┘
                             │
                             ▼          S1501
                        ╱─────────╲
                       ╱ PARAMETER ╲         Yes
                      ╱  CORRECTION  ╲──────────────────────┐
                      ╲  SETTING ON? ╱                      │
                       ╲─────────────╱                      ▼
                             │          ┌──────────────────────────────┐
                            No          │  EXECUTE PROCESSING FOR       │
                             │          │  EACH OF PAN, TILT, AND ROLL  │
                             │          └──────────────────────────────┘
                             │                        │
                             │                        ▼
                             │          ┌──────────────────────────────┐
                             │          │    EXECUTE PROCESSING          │
                             │          │    FOR ALL KEY FRAMES          │
                             │          └──────────────────────────────┘
                             │                        │
                             │            ┌───────────┘
                             │            ▼              S1502
                             │        ╱─────────╲
                             │       ╱ DIFFERENCE ╲        No
                             │      ╱ FROM NEXT KEY ╲──────────────────────┐
                             │      ╲   FRAME        ╱                      │
                             │       ╲  > 180°?     ╱                       │
                             │        ╲─────────────╱                       │
                             │              │                               │
                             │             Yes                              │
                             │              ▼              S1503            │
                             │          ╱─────────╲                         │
                             │         ╱ TARGET KEY ╲        No             │
                             │        ╱ FRAME >       ╲──────────────┐      │
                             │        ╲ NEXT KEY FRAME?╱             │      │
                             │         ╲──────────────╱              │      │
                             │               │                       │      │
                             │              Yes      S1504           │      │
                             │               ▼                       │      │
                ┌────────────┴──────┐  ┌──────────────────┐          │      │
                │                   │  │  SUBTRACT 360°    │          │      │
       S902     │                   │  │  FROM ALL KEY     │          │      │
  ┌──────────────────────┐          │  │  FRAMES PRIOR     │          │      │
  │  CREATE CAMERA PATH   │          │  │  TO TARGET        │   S1505  │      │
  │  BY INTERPOLATING     │          │  │  KEY FRAME        │          │      │
  │  BETWEEN KEY FRAMES   │          │  └──────────────────┘    ┌──────────────────┐
  └──────────────────────┘          │          │               │ ADD 360° TO ALL   │
            │    S903                │          │               │ KEY FRAMES PRIOR  │
            ▼                        │          │               │ TO TARGET KEY     │
  ┌──────────────────────┐          │          │               │ FRAME             │
  │   ADD CAMERA PATH     │          │          │               └──────────────────┘
  │   TO CLIP LIST        │          │          │                       │
  └──────────────────────┘          │          │◄──────────────────────┘
            │    S904                │          ▼
            ▼                        │  ┌──────────────────────────────┐
  ┌──────────────────────┐          │  │    EXECUTE PROCESSING          │
  │   CLEAR KEY FRAME     │          │  │    FOR ALL KEY FRAMES          │
  └──────────────────────┘          │  └──────────────────────────────┘
            │                        │          │
            ▼                        │          ▼
         ( End )                     │  ┌──────────────────────────────┐
                                     │  │  EXECUTE PROCESSING FOR       │
                                     │  │  EACH OF PAN, TILT, AND ROLL  │
                                     │  └──────────────────────────────┘
                                     │          │
                                     └──────────┘
```

## FIG. 16

Start

SEND SIGNAL TO SWITCH TO
PRESET MOVEMENT MODE — S1101

S1102

CONTROL MODE? ──── CLIP PLAYBACK MODE

MANUAL CONTROL MODE OR
PRESET MOVEMENT MODE

SWITCH CONTROL MODE TO
PRESET MOVEMENT MODE — S1103

S1601

PARAMETER
CORRECTION SETTING
ON? ──── Yes

No

EXECUTE PROCESSING FOR
EACH OF PAN, TILT, AND ROLL

S1104

DIFFERENCE
BETWEEN CURRENT
ORIENTATION AND PRESET
ORIENTATION > 180°? ──── No

Yes

S1105

CURRENT
ORIENTATION > PRESENT
ORIENTATION? ──── No

Yes    S1106                         S1107

CURRENT ORIENTATION =        CURRENT ORIENTATION =
CURRENT ORIENTATION − 360°    CURRENT ORIENTATION + 360°

EXECUTE S1104 TO S1107 FOR
EACH OF PAN, TILT, AND ROLL

SET REMAINING PRESET MOVEMENT
TIME FOR PRESET MOVEMENT TIME — S1108

End

**EP 4 451 667 A1**

# EUROPEAN SEARCH REPORT

Application Number

EP 24 16 5085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/006995 A1 (SAKAKIMA EITO [JP]) 6 January 2022 (2022-01-06) | 1,3-5,7, 8,11,12 | INV. H04N13/117 |
| Y | * figure 4 * * paragraph [0043] - paragraph [0044] * * paragraph [0046] * * paragraph [0049] * * paragraph [0055] * | 2,6,9,10 | |
| Y | JP 2022 060815 A (CANON KK) 15 April 2022 (2022-04-15) * paragraph [0011] * | 2,6,9,10 | |
| A | US 2022/109823 A1 (MINATO YOSHIHIKO [JP]) 7 April 2022 (2022-04-07) * paragraph [0083] - paragraph [0085] * | 8 | |
| A | US 2016/088280 A1 (SADI SAJID [US] ET AL) 24 March 2016 (2016-03-24) * abstract * | 1,11,12 | |

TECHNICAL FIELDS SEARCHED (IPC)

H04N

The present search report has been drawn up for all claims

| Place of search | Date of completion of the search | Examiner |
|---|---|---|
| The Hague | 21 August 2024 | Cooke, Edward |

EPO FORM 1503 03.82 (P04C01)

# EP 4 451 667 A1

## ANNEX TO THE EUROPEAN SEARCH REPORT
## ON EUROPEAN PATENT APPLICATION NO.

EP 24 16 5085

21-08-2024

| Patent document cited in search report | Publication date | Patent family member(s) | Publication date |
|---|---|---|---|
| US 2022006995 A1 | 06-01-2022 | JP 2022014358 A | 19-01-2022 |
| | | US 2022006995 A1 | 06-01-2022 |
| JP 2022060815 A | 15-04-2022 | NONE | |
| US 2022109823 A1 | 07-04-2022 | JP 2022060816 A | 15-04-2022 |
| | | US 2022109823 A1 | 07-04-2022 |
| US 2016088280 A1 | 24-03-2016 | CN 105659592 A | 08-06-2016 |
| | | CN 106797459 A | 31-05-2017 |
| | | CN 106797460 A | 31-05-2017 |
| | | CN 107079141 A | 18-08-2017 |
| | | EP 3198862 A1 | 02-08-2017 |
| | | EP 3198863 A1 | 02-08-2017 |
| | | EP 3198865 A1 | 02-08-2017 |
| | | EP 3198866 A1 | 02-08-2017 |
| | | KR 20170052673 A | 12-05-2017 |
| | | KR 20170052674 A | 12-05-2017 |
| | | KR 20170052675 A | 12-05-2017 |
| | | KR 20170052676 A | 12-05-2017 |
| | | US 2016088280 A1 | 24-03-2016 |
| | | US 2016088282 A1 | 24-03-2016 |
| | | US 2016088285 A1 | 24-03-2016 |
| | | US 2016088287 A1 | 24-03-2016 |
| | | WO 2016048013 A1 | 31-03-2016 |
| | | WO 2016048014 A1 | 31-03-2016 |
| | | WO 2016048015 A1 | 31-03-2016 |
| | | WO 2016048017 A1 | 31-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007025979 A